# EUROPÄISCHE PATENTSCHRIFT

(11) **EP 2 191 114 B1**
(45) Veröffentlichungstag und Bekanntmachung des Hinweises auf die Patenterteilung: **14.12.2011**
(21) Anmeldenummer: 08782840.6
(22) Anmeldetag: 02.09.2008
(51) Int. Cl.: F01N 3/34, F02F 1/42, F01N 13/10

(54) **VERBRENNUNGSKRAFTMASCHINE**
INTERNAL COMBUSTION ENGINE
MOTEUR À COMBUSTION INTERNE

(30) Priorität: 20.09.2007 AT 14792007
(43) Veröffentlichungstag der Anmeldung: 02.06.2010
(73) Patentinhaber: Kirchberger, Roland, 8052 Graz (AT)
(72) Erfinder: Kirchberger, Roland, 8052 Graz (AT)
(74) Vertreter: Hübscher, Helmut
(86) Internationale Anmeldenummer: PCT/AT2008/000312
(87) Internationale Veröffentlichungsnummer: WO 2009/036476

(56) Entgegenhaltungen:
- EP-A- 1 627 999
- DE-A1- 19 944 010
- US-A- 3 635 031
- US-A- 3 927 525
- US-A- 5 761 904
- US-B1- 6 311 483

## Beschreibung

### Technisches Gebiet

Die Erfindung bezieht sich auf eine Verbrennungskraftmaschine mit wenigstens einem Zylinder, dessen Zylinderkopf zumindest einen in einen Abgasstrang übergehenden Auslasskanal bildet, der einen rohrförmigen, unter Ausbildung eines Ringspaltes innerhalb einer Zylinderkopföffnung angeordneten Einsatz umfasst, wobei der mit dem Auslasskanal in Strömungsverbindung stehende Ringspalt an eine Luftleitung angeschlossen ist.

### Stand der Technik

Um die Schadstoffemission von Verbrennungskraftmaschinen zu verringern, ist es bekannt (US 4 437 305 A, US 4 727 717 A, US 6 311 483 B, US 3 927 525 A), den Abgasen Frischluft für eine gegebenenfalls durch Katalysatoren unterstützte Nachverbrennung beispielsweise von Kohlenwasserstoffen oder Kohlenmonoxid in einem Abgasstrang über eine im Ansaugbereich durch ein Membranventil in Abhängigkeit von den Druckverhältnissen im Abgaskanal gesteuerte Luftleitung zuzuführen. Da die angestrebte Oxidation temperaturabhängig ist, lässt man die Luftleitung unmittelbar nach den Auslassventilen in den Auslassanal des Zylinderkopfes münden, sodass für eine rasche Erwärmung der Frischluft durch die heißen Abgase aus dem Brennraum des Zylinders und für eine unmittelbare Reaktion mit dem Abgas gesorgt ist. Durch die heißen Abgase kommt es bei Verbrennungskraftmaschinen insbesondere im Bereich der Auslasskanäle zu beachtlichen Wärmeeintragungen in den Zylinderkopf, was zu thermischen Verformungen und damit verbunden zu Dichtungsschwierigkeiten und einem erhöhten Verschleiß sowie einer erhöhten Klopfneigung bei der Verbrennung führen kann. Mit der Zufuhr sekundärer Frischluft in den Auslasskanal ist eine Kühlwirkung verbunden, die im Bereich der Abgase wegen der temperaturabhängigen Oxidationsvorgänge unerwünscht ist, im Bereich des Zylinderkopfes aber nicht ausreicht, um vor allem im Volllastbetrieb thermische Überlastungen auszuschließen.

Zur Vermeidung dieser Nachteile wurde bereits vorgeschlagen (DE 103 27 305 A1), in der Zylinderkopföffnung für den Auslasskanal einen rohrförmigen Einsatz vorzusehen, zwischen dem und der Zylinderkopföffnung ein an die Luftleitung angeschlossener Ringspalt frei bleibt, über den die Frischluft durch Durchtrittsöffnungen im rohrförmigen Einsatz in den durch den Einsatz gebildeten Strömungskanal für die Abgase gelangt. Dieser mit Frischluft gespülte Ringspalt unterbindet einen unmittelbaren Wärmeübergang vom Auslasskanal in den Zylinderkopf und sorgt daher für eine Begrenzung der thermischen Belastung des Zylinderkopfes im Bereich des Auslasskanals. Es wird aber auch die Nachbehandlung der Abgase verbessert, weil die als Sekundärluft für die Nachverbrennung in den Ringspalt eingeführte Frischluft wegen der vergleichsweise großen Berührungsfläche einerseits mit dem Zylinderkopf und anderseits mit dem rohrförmigen Einsatz rasch erwärmt wird. Nachteilig ist allerdings, dass für die Frischluftförderung eine Pumpe vorzusehen ist. Außerdem ist der thermische Durchgriff vom rohrförmigen Einsatz auf den Abgasstrang unbefriedigend.

### Darstellung der Erfindung

Der Erfindung liegt somit die Aufgabe zugrunde, eine Verbrennungskraftmaschine der eingangs geschilderten Art so auszugestalten, dass auf eine Förderpumpe für die Frischluft verzichtet werden kann, ohne Nachteile hinsichtlich der Frischluftführung in Kauf nehmen zu müssen. Darüber hinaus sollen vorteilhafte Wärmebedingungen im Abgasstrang sowohl beim Kaltstart als auch bei warmer Verbrennungskraftmaschine mit einfachen konstruktiven Mitteln erreicht werden.

Die Erfindung löst die gestellte Aufgabe dadurch, dass der rohrförmige Einsatz Teil des Abgasstranges ist und dass sich der Ringspalt im Mündungsbereich der Luftleitung zu einer gegenüber der Luftleitung durch ein Membranventil abgegrenzten Kammer erweitert.

Mit der Maßnahme, den rohrförmigen Einsatz als Teil des Abgasstranges auszubilden, wird nicht nur eine Konstruktionsvereinfachung erzielt, weil der rohrförmige Einsatz mit dem Anflanschen des Abgasstranges am Zylinderkopf innerhalb der Zylinderkopföffnung positioniert wird, sondern auch das thermische Verhalten des Abgasstranges verbessert. Während des Warmlaufens der Verbrennungskraftmaschine wird nämlich der Abgasstrang durch die Wärmeleitung über den rohrförmigen Einsatz schneller erwärmt, sodass Abgaskatalysatoren im Bereich des Abgasstranges in kürzerer Zeit die erforderliche Betriebstemperatur erreichen, was zu einem verringerten Emissionsausstoß führt. Bei warmer Verbrennungskraftmaschine wird hingegen insbesondere im Volllastbereich eine Kühlwirkung im Bereich des Auslasskanals erzielt, weil die vom rohrförmigen Einsatz aufgenommene Wärme unbehindert in den Abgasstrang weitergeleitet werden kann, wodurch die thermische Belastung des Zylinderkopfes mit dem zusätzlichen Vorteil gesenkt werden kann, dass die Klopfneigung insbesondere von luftgekühlten, hochbelasteten Ottomotoren deutlich verringert werden kann.

Aufgrund des Anschlusses des Ringspaltes an die Luftleitung über eine den Ringspalt zwischen dem rohrförmigen Einsatz und der Zylinderkopföffnung für den Auslasskanal erweiternden Kammer, über die das die Luftleitung steuernde Membranventil mit dem Druck im Auslasskanal beaufschlagt wird, können die gasdynamischen Effekte weitgehend ungedämpft auf das Membranventil einwirken, sodass es keiner Förderpumpe bedarf, um die Frischluft in Abhängigkeit von den jeweils im Auslasskanal auftretenden Druckschwankungen über das Membranventil in den Abgasstrang anzusaugen. Zur Schonung des Membranventils kann diesem ein Anschlag für die Offenstellung des durch eine Membran gebildeten Ventilkörpers zugeordnet werden.

Besonders einfache Konstruktionsverhältnisse ergeben sich im Zusammenhang mit dem erfindungsgemäßen Einsatz, wenn der rohrförmige Einsatz als ein in den Auslasskanal ragender Stutzen des Abgasstranges ausgebildet ist. In diesem Fall wird außerdem die Wärmeleitung vom in die Zylinderkopföffnung ragenden Einsatz in den Abgasstrang durch die Einstückigkeit des rohrförmigen Ansatzes mit dem weiterführenden Rohr des Abgasstranges vorteilhaft unterstützt.

### Kurze Beschreibung der Zeichnung

In der Zeichnung ist der Erfindungsgegenstand beispielsweise dargestellt. Es zeigen
- Fig. 1: erfindungsgemäße Verbrennungskraftmaschine ausschnittsweise im Bereich eines Zylinderkopfes in einem schematischen Axialschnitt und die

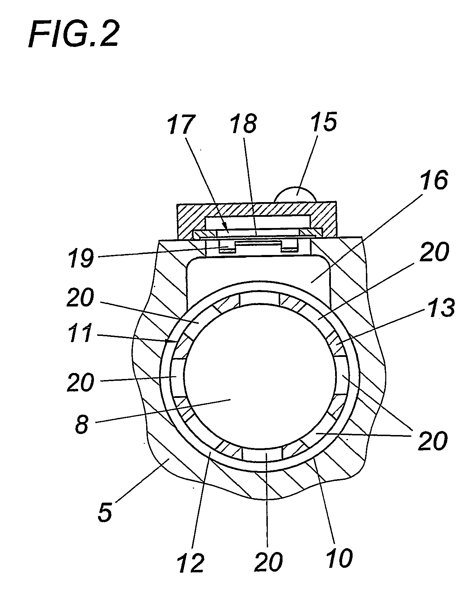

- Fig. 2: den Zylinderkopf in einem Schnitt gemäß der Linie II-II der Fig. 1 in einem größeren Maßstab.

### Wege zur Ausführung der Erfindung

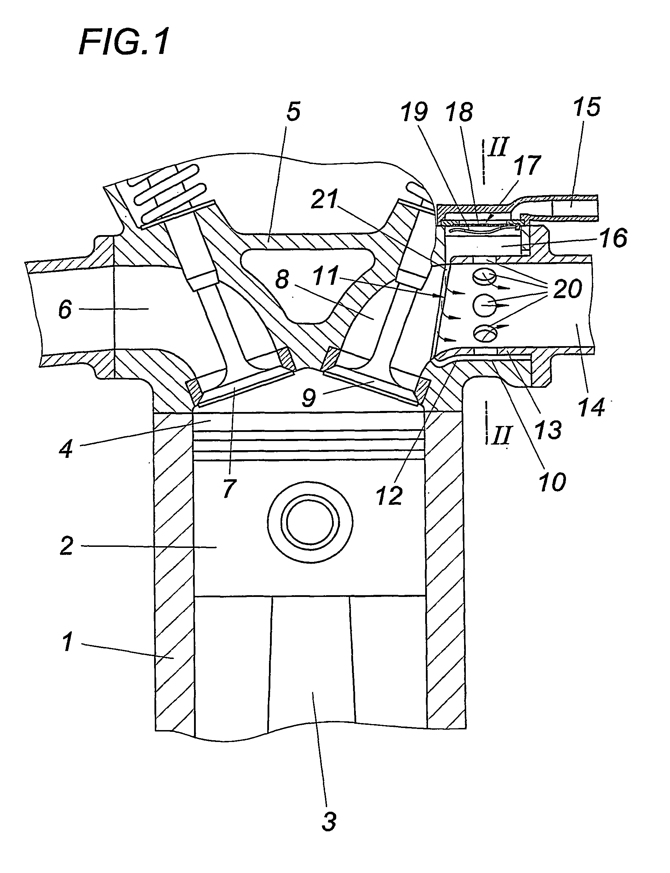

Die Verbrennungskraftmaschine gemäß der Fig. 1 weist wenigstens einen Zylinder 1 mit einem Kolben 2 auf, der über eine Pleuelstange 3 in herkömmlicher Art mit einer Kurbelwelle verbunden ist. Der Brennraum 4 des Zylinders 1 ist nach oben durch einen Zylinderkopf 5 abgeschlossen, der wenigstens einen Einlasskanal 6 mit einem Einlassventil 7 sowie wenigstens einen Auslasskanal 8 mit einem Auslassventil 9 bildet. Der Auslasskanal 8 umfasst einen in einer Zylinderkopföffnung 10 vorgesehenen, rohrförmigen Einsatz 11, zwischen dem und der Zylinderkopföffnung 10 ein Ringspalt 12 frei bleibt. Der Einsatz 11 ist in Form eines Stutzens 13 als Teil eines Abgasstranges 14 ausgebildet, der in üblicher Weise über einen Auspuffkrümmer an den Auslasskanal 8 angeschlossen ist.

Der Ringspalt 12 ist mit einer Luftleitung 15 verbunden, durch die dem Abgasstrang 14 Frischluft zur Nachverbrennung brennbarer Reststoffe zugeführt wird. Die Anordnung ist dabei so getroffen, dass sich im Mündungsbereich der Luftleitung 15 der Ringspalt 12 zu einer Kammer 16 erweitert, die ein Membranventil 17 zur Steuerung der Luftleitung 15 aufnimmt. Das Membranventil 17 weist eine metallische Membran 18 als Ventilkörper auf, für den ein Anschlag 19 zur Begrenzung der Öffnungsweite vorgesehen ist.

Aufgrund der Anordnung des Membranventils 17 in einer durch eine Erweiterung des Ringspaltes 12 erhaltenen Kammer 16 greifen die gasdynamischen Wirkungen im Abgasstrang 14 ohne eine ins gewicht fallende Dämpfung auf das Membranventil durch, das somit in unmittelbarer Abhängigkeit von diesen gasdynamischen Wirkungen angesteuert wird und eine selbstansaugende Zufuhr der Frischluft durch Durchtrittsöffnungen 20 bzw. einen stirnseitigen Randspalt 21 in einem ausreichenden Ausmaß sicherstellt. Die Ausbildung des rohrförmigen Einsatzes 11 als Teil des Abgasstranges 14 ermöglicht darüber hinaus eine vorteilhafte Wärmeleitung vom Einsatz 11 auf den weiterführenden Abgasstrang, insbesondere wenn der Einsatz 11 als Stutzen 13 des Abgasstranges 14 geformt ist. Diese Wärmeleitung vom Einsatz 11 zum Abgasstrang 14 unterstützt die Erwärmung des Abgasstranges 14 während der Warmlaufphase der Verbrennungskraftmaschine und bringt eine Kühlung des Einsatzes 11 vor allem im Hochlastbereich mit sich.

## Patentansprüche

1. Verbrennungskraftmaschine mit wenigstens einem Zylinder, dessen Zy-linderkopf (5) zumindest einen in einen Abgasstrang (14) übergehenden Auslasskanal (8) bildet, der einen rohrförmigen, unter Ausbildung eines Ringspaltes (12) innerhalb einer Zylinderkopföffnung (10) angeordneten Einsatz (11) umfasst, wobei der mit dem Auslasskanat (8) in Strömungsverbindung stehende Ringspalt (12) an eine Luftleitung (15) angeschlossen ist, **dadurch gekennzeichnet, dass** der rohrförmige Einsatz (11) Teil des Abgasstranges (14) ist und dass sich der Ringspalt (12) im Mündungsbereich der Luftleitung (15) zu einer gegenüber der Luftleitung (15) durch ein Membranventil (17) abgegrenzten Kammer (16) erweitert.

2. Verbrennungskraftmaschine nach Anspruch 1, **dadurch gekennzeichnet, dass** der Einsatz (11) als ein in den Auslasskanal (8) ragender Stutzen (13) des Abgasstranges (14) ausgebildet ist.

3. Verbrennungskraftmaschine nach Anspruch 1 oder 2, **dadurch gekennzeichnet, dass** dem Membranventil (17) ein Anschlag (19) für die Offenstellung des durch eine Membran (18) gebildeten Ventilkörpers zugeordnet ist.

## Claims

1. Internal combustion engine having at least one cylinder, of which the cylinder head (5) forms at least one outlet channel (8) which merges into an exhaust gas section (14) and which comprises a tubular insert (11) which is disposed within a cylinder head opening (10) with the formation of an annular gap (12), wherein the annular gap (12) which is in flow-connection with the outlet channel (8) is connected to an air line (15), **characterised in that** the tubular insert (11) is part of the exhaust gas section (14) and that the annular gap (12) widens in the opening region of the air line (15) to form a chamber (16) which is delimited with respect to the air line (15) by means of a diaphragm valve (17).

2. Internal combustion engine as claimed in claim 1, **characterised in that** the insert (11) is formed as a connecting piece (13) of the exhaust gas section (14), which connecting piece protrudes into the outlet channel (8).

3. Internal combustion engine as claimed in claim 1 or 2, **characterised in that** the diaphragm valve (17) is allocated a stop (19) for the open position of the valve body which is formed by a diaphragm (18).

## Revendications

1. Moteur à combustion interne, avec au moins un cylindre, dont la culasse (5) forme au moins un canal d'échappement (8) se transformant en un circuit de gaz d'échappement (14), comprenant un insert (11) tubulaire, disposé en formant un interstice annulaire (12) à l'intérieur d'une ouverture de culasse (10), l'interstice annulaire (12), placé en liaison d'écoulement avec le canal d'échappement (8), étant raccordé à une conduite d'air (15), **caractérisé en ce que** l'insert (11) tubulaire fait partie du circuit de gaz d'échappement (14), et **en ce que**, dans la zone d'embouchure de la conduite d'air (15), l'interstice annulaire (12) s'élargit en devenant une chambre (16) délimitée par rapport à la conduite d'air (15) au moyen d'une soupape à membrane (17).

2. Moteur à combustion interne selon la revendication 1, **caractérisé en ce que** l'insert (11) est réalisé sous forme d'une tubulure (13), pénétrant dans le canal d'échappement (8), du circuit de gaz d'échappement (14).

3. Moteur à combustion interne selon la revendication 1 ou 2, **caractérisé en ce qu'**une butée (19), pour la position ouverte du corps de soupape formé par une membrane (18), est associée à la soupape à membrane (17).
